# EUROPEAN PATENT APPLICATION

(11) **EP 1 416 493 A2**
(43) Date of publication of application: **06.05.2004**
(21) Application number: 03022809.2
(22) Date of filing: 07.10.2003
(51) Int. Cl.: G11B 33/14, G11B 33/02, G11B 25/10

(54) **Audio and video combined apparatus**

(30) Priority: 10.10.2002 JP 2002297881
(71) Applicant: Orion Electric Company, Ltd., Takefu-shi, Fukui-ken (JP)
(72) Inventor: Sasaki, Kazuo, Takefu-shi Fukui-ken (JP); Frunaki, Yoichi, Takefu-shi Fukui-ken (JP); Umemoto, Kazuaki, Takefu-shi Fukui-ken (JP)
(74) Representative: Kirschner, Klaus Dieter, Dipl.-Phys.

(57) **Abstract**

It is an object to decrease the influence of a noise generated from an operating device without providing a shielding plate in an audio and video combined apparatus in which a DVD unit and a video cassette unit are provided in the same housing. A double-sided board (13) mounting a DVD operating device (5) and a video operating device (10) is provided between a video cassette deck (8) and a bottom plate panel (1a) of a housing (1). The DVD operating device (5) is positioned below the video cassette deck (8). The DVD operating device (5) is surrounded by a metallic chassis of the video cassette deck (8) and the metallic bottom plate panel (1a) of the housing (1) and is thus shielded electromagnetically. A noise generated from the DVD operating device (5) is shielded so that the video cassette deck (8) is not influenced.

## Description

The present invention relates to an audio and video combined apparatus mounting a plurality of apparatuses such as a DVD video recorder and a videocassette recorder in combination.

In an audio and video combined apparatus integrating a plurality of apparatuses such as a DVD video recorder, a videocassette recorder and a television, a noise generated from one of the apparatuses adversely influences the other apparatuses in some cases.

For example, in case of an audio and video combined apparatus integrally comprising a DVD unit and a videocassette unit, a noise having a high frequency which is generated from a DVD operating device including a circuit for processing a video signal is picked up by the video head of a video cassette unit so that normal videotape recording cannot be carried out.

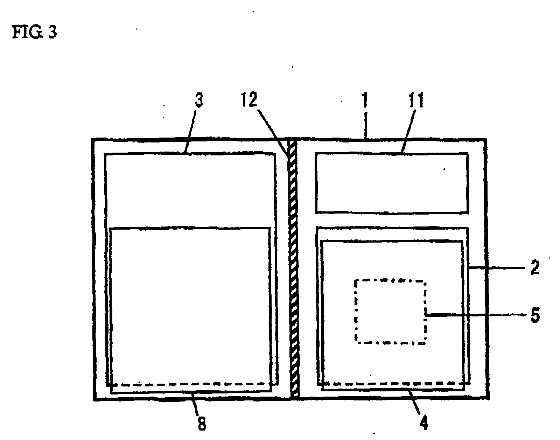

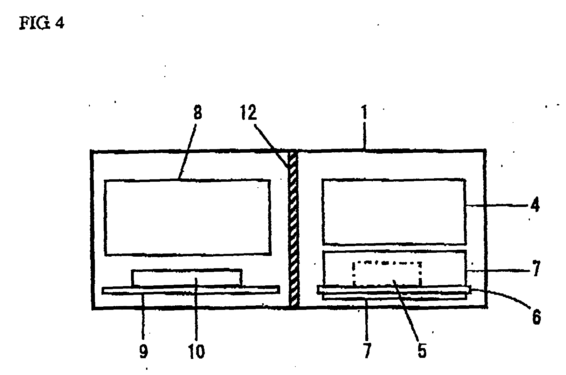

In order to reduce such an influence of the noise, a DVD unit 2 and a videocassette unit 3 are provided separately in a housing 1 as shown in Figs. 3 and 4. In the DVD unit 2, a printed board 6 mounting a DVD operating device 5 having a signal processing circuit, a microcomputer and the like is provided below a DVD deck 4. Since the chassis of the DVD deck 4 is formed of a synthetic resin, it does not have an electromagnetic shielding function. Therefore, a shielding plate 7 is provided around the DVD operating device 5, and furthermore, is provided on the lower surface of the printed board 6 at the opposite side of a surface on which the DVD operating device 5 is mounted. Accordingly, the DVD operating device 5 is positioned away from the videocassette unit 3 and is surrounded by the shielding plate 7. Consequently, it is possible to lessen the influence of a noise generated from the DVD operating device 5 on the videocassette unit 3.

In the video cassette unit 3, a printed board 9 is provided below a video cassette deck 8 and a video cassette operating device 10 having a video recording and reproducing circuit, a microcomputer and the like is provided thereon. A power device 11 mounted on the printed board is provided behind the DVD unit 2. The DVD unit 2 and the power device 11 are arranged in a longitudinal direction. Consequently, the depth of the housing 1 is increased. A reinforcing plate 12 is provided between the DVD unit 2 and the videocassette unit 3 in order to maintain the strength of the housing 1. Moreover, the videocassette operating device 10 and the power device 11 and DVD operating device 5 are connected to each other through a flexible flat cable or a lead wire.

As another conventional example, moreover, the upper, front and side parts of a DVD unit are covered with a plurality of magnetic shielding plates to carry out electromagnetic shielding, and furthermore, the magnetic shielding plate is caused to function as the reinforcing member of a housing in Patent Document 1.

### [Patent Document 1]

### Japanese Laid-Open Patent Publication No. 2002-50171 (Paragraph 0034, Fig. 3)

With a conventional structure, units are provided separately. Therefore, it is necessary to provide a shielding plate against a DVD operating device for electromagnetic shielding, and furthermore, a reinforcing plate. Consequently, the number of components is increased and the man-day of an assembly work is also increased so that a cost is increased.

In addition, a wiring is to be given to get over the reinforcing plate in order to electrically connect an operating device or a power device of each of units mounted on different boards respectively. As a result, the wiring becomes long and the cost of a material is increased, and furthermore, the man-day of an assembly work is increased. If the wiring becomes long, moreover, a noise is apt to be generated. In a wiring given from a DVD operating device, particularly, the generation of the noise is remarkable. For this reason, it is necessary to attach a component such as a ferrite core in order to take a countermeasure against a noise. Consequently, the number of components and the man-day of the assembly work are increased.

In consideration of the foregoing, it is an object of the present invention to provide an audio and video combined apparatus having such a structure that electromagnetic shielding is carried out by utilizing an existing member without increasing the number of components and a reinforcing plate is not required.

In order to attain the object, the present invention provides an audio and video combined apparatus wherein a housing includes a plurality of apparatuses, an operating device constituting the apparatus is mounted on a board, and an operating device for generating a noise is positioned between a panel of the housing and a chassis forming the apparatus and is thus shielded electromagnetically.

More specifically, the operating device is surrounded with the panel of the housing and the chassis of the apparatus by utilizing the shielding property of the panel of the housing and the chassis of the apparatus against a noise. Consequently, a noise generated from the operating device can be shielded. Accordingly, it is possible to decrease the influence of the noise on the apparatus. The apparatus for electromagnetically shielding the operating device is different from the apparatus constituted by the operating device.

If a double-sided board is used as a board for mounting the operating device, moreover, high density mounting can be carried out, and the size of the board can be reduced and the housing can be small-sized. Consequently, it is not necessary to reinforce the housing. The panel and the chassis are preferably formed by materials having a conductiveness, and are formed by a metal or a conductive synthetic resin. Thus, a shielding effect against a noise can be enhanced. In the case in which the panel and the chassis are formed by materials having no conductiveness, it is preferable that a conductive sheet should be stuck to the panel and the chassis or a film should be formed by a conductive coating material.

An audio and video apparatus has a driving deck of a recording medium, and an operating device for controlling the driving operation of the driving deck and carrying out a signal processing for the recording medium. The operating device and a power device in each apparatus are mounted on a board, and the board is provided between the housing and at least one of the apparatuses. The operating device generating a noise is surrounded with the panel of the housing and the chassis of the apparatus and is thus shielded electromagnetically. More specifically, the operating device of a noise generating source is covered by at least one apparatus. The board may be provided in any of lower, upper, side and rear parts of the apparatus between the apparatus and the housing.

By such a structure, at least one chassis is provided between the operating device of the noise generating source and the driving deck or operating device influenced by a noise. As a result, the noise is shielded by the chassis so that the influence of the noise on other driving decks or operating devices can be decreased.

As a specific example, in case of an audio and video combined apparatus wherein a housing includes a DVD deck, a video cassette deck, a DVD operating device, a video cassette operating device and a power device, both of the operating devices and the power device are mounted on at least one double-sided board, the double-sided board is provided between the housing and the video cassette deck, and the DVD operating device to be a source for generating a noise is positioned below the video cassette deck, and is surrounded by a conductive panel of the housing and a conductive chassis of the video cassette deck and is thus shielded electromagnetically.

By utilizing a space formed below the video cassette deck, thus, the double-sided board is provided and the DVD operating device, particularly, a signal processing circuit generating a noise is positioned below the video cassette deck. By the shielding effect of the chassis of the video cassette deck, it is possible to shield a noise generated from the circuit of the DVD operating device and to carry out sufficient electromagnetic shielding without a shielding plate. Moreover, an existing board providing space is utilized. Therefore, the height of the housing can be prevented from being increased.
Fig. 1 is a plan view showing the internal structure of a DVD and video cassette combined apparatus according to an embodiment of the present invention,
Fig. 2 is a front view showing the same internal structure,
Fig. 3 is a plan view showing the internal structure of a conventional DVD and video cassette combined apparatus, and
Fig. 4 is a front view showing the same internal structure.

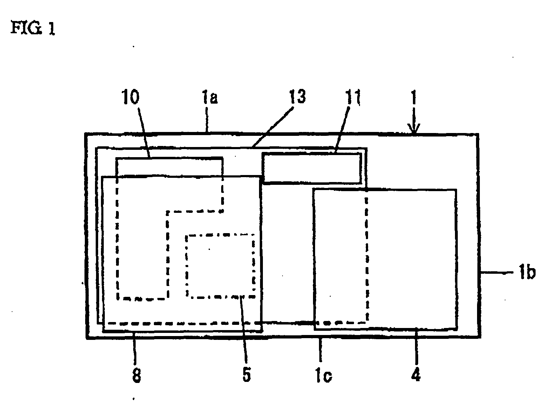

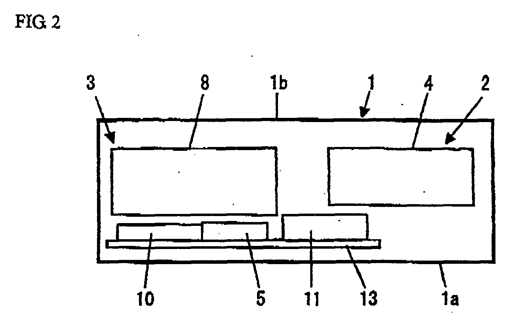

Figs. 1 and 2 show an audio and video combined apparatus according to an embodiment of the present invention. The combined apparatus comprises two apparatuses, that is, a DVD unit 2 and a video cassette unit 3, and each of the units 2 and 3 and a power device 11 are provided in a housing 1.

The housing 1 is constituted by a metallic bottom plate panel 1a having a conductiveness, a top plate panel 1b, and a front panel 1c formed of a synthetic resin. The bottom plate panel 1a is obtained by integrating a bottom plate and a back plate. The top plate panel 1b is obtained by integrating an upper plate and left and right side plates. The panels 1a, 1b and 1c are screwed to each other so that the housing 1 is assembled.

The DVD unit 2 has a DVD deck 4 for carrying out the reproduction of a DVD or the recording and reproduction of the DVD, and a DVD operating device 5 for controlling the driving operation of the DVD deck 4 and performing a signal processing over the DVD. The video cassette unit 3 has a video cassette deck 8 for carrying out the recording and reproduction of a video cassette, and a video operating device 10. for controlling the driving operation of the video cassette deck 8, and carrying out a signal processing over the video cassette and controlling a whole combined apparatus.

The DVD deck 4 has such a structure that a chassis formed of a synthetic resin includes a mechanism section such as a motor and an optical section such as an optical pick-up. The DVD deck 4 is provided on a right side in the housing 1 and has a chassis fixed to the housing 1 with a screw or the like. The video cassette deck 8 has such a structure that the mechanism section such as a motor and a recording and reproducing section such as a head are mounted on the upper surface of a metallic chassis in which the upper and rear surfaces are opened. The video cassette deck 8 is provided on a left side in the housing 1 and has a chassis fixed to the housing 1 with a screw or the like. Each of the operating devices 5 and 10 has a signal processing circuit for processing a video signal for reproduction or recording, and a microcomputer for controlling the mechanism section, the optical section, the signal processing circuit or the like.

A space is formed between the DVD deck 4 and video cassette deck 8 and the bottom plate of the housing 1, and a double-sided board 13 is provided in the space and is attached to the bottom plate with a screw or the like. Other circuits such as the DVD operating device 5, the video operating device 10, the power device 11 and a ground circuit are mounted on the double-sided board 13.

The double-sided board 13 is positioned from a portion provided below the video cassette deck 8 to a portion provided below a part of the left side of the DVD deck 4. The DVD operating device 5, the video operating device 10 and the power device 11 are mounted on the upper surface of the double-sided board 13. The DVD operating device 5 generating a noise having a high frequency is positioned below the video cassette deck 8. In particular, the signal processing circuit to be a noise generating source is provided under the chassis having a conductiveness in the video cassette deck 8. The other circuits generating no noise may be provided in a position which is not covered with the video cassette deck 8.

The video operating device 10 is positioned on the left side of the DVD operating device 5 below the video cassette deck 8. The power device 11 is positioned on a rear side which is not covered with the DVD deck 4 and the video cassette deck 8. The DVD operating device 5 and the video operating device 10 may be mounted in the same positions on the lower surface of the double-sided board 13.

By the structure described above, the DVD operating device 5 includes an upper part covered with the chassis having a conductiveness in the video cassette deck 8 and a lower part covered with the bottom plate panel 1a having the conductiveness in the housing 1. Accordingly, the DVD operating device 5 is surrounded by the chassis and the bottom plate and is thus shielded electromagnetically. A noise having a high frequency which is generated from the DVD operating device 5 is shielded and the head of the video cassette deck 8 can be prevented from being adversely influenced. In addition, the ground circuit is formed on the double-sided board 13 so that a noise to be generated can be relieved.

By using the double-sided board 13, it is possible to increase a mounting area per board. Although at least three boards have conventionally been required, consequently, one board is enough. Accordingly, it is possible to reduce the total size of the board in a whole apparatus. Consequently, the depth of the housing 1 can be reduced. Since the size of the apparatus can be decreased, thus, a cost of transportation can be reduced.

Even if the conventional reinforcing plate is not provided, moreover, the strength of the housing can be fully maintained so that the reinforcing plate is not required. In addition, the operating devices 5 and 10 and the power device 11 are mounted on the same board. Therefore, a wiring for connecting them is not required so that a component for suppressing a noise is not required. As described above, one board can decrease the number of components, resulting in a reduction in a cost.

It is a matter of course that the present invention is not restricted to the embodiment described above but many modifications and changes can be made to the embodiment without departing from the scope of the present invention. It is sufficient that the DVD operating device is positioned between the video cassette deck and the housing. Therefore, the DVD operating device may be positioned on the side of the video cassette deck, and is surrounded by the chassis of the video cassette deck and the side plate of the housing and is thus shielded electromagnetically.

Examples of the apparatuses in the combined apparatus include a television, a hard disk video recorder, a CD player, a minidisk player and a read/writer for a semiconductor memory in addition to a DVD video recorder and a video cassette recorder. At least two of them may be combined to constitute the combined apparatus. A board mounting a tuner generating a noise is provided between an apparatus having a conductive chassis and a housing, thereby carrying out electromagnetic shielding. Moreover, the board may be provided to be covered with at least two apparatuses.

As is apparent from the above description, according to the present invention, the operating device such as the signal processing circuit generating a noise is provided between the chassis of the apparatus and the panel of the housing. Consequently, the electromagnetic shielding can be carried out by existing members such as the chassis and the panel which have a conductiveness. Accordingly, it is not necessary to separately provide a shielding plate. Thus, the number of components can be decreased. By using the double-sided board, moreover, the operating devices of the apparatuses provided separately can be mounted on the same board. Consequently, it is possible to reduce a space for providing the operating devices of the apparatuses. Accordingly, the housing can be small-sized so that the size of the apparatus can be reduced.

## Claims

1. An audio and video combined apparatus wherein a housing includes a plurality of apparatuses, an operating device constituting said apparatus is mounted on a board, and an operating device generating a noise is positioned between a panel of said housing and a chassis forming said apparatus and is thus shielded electromagnetically.

2. An audio and video combined apparatus wherein a housing includes a plurality of driving decks and operating devices corresponding to various recording media, and a power device, and said operating devices and said power device are mounted on a board, said board is provided between said housing and at least one of said driving decks, and an operating device generating a noise is surrounded by a panel of said housing and a chassis of said driving deck and is thus shielded electromagnetically.

3. An audio and video combined apparatus wherein a housing includes a DVD deck, a video cassette deck, a DVD operating device, a video cassette operating device and a power device, both of said operating devices and said power device are mounted on at least one double-sided board, said double-sided board mounting said DVD operating device is provided between said housing and said video cassette deck, and a circuit generating a noise in said DVD operating device is positioned below said video cassette deck, and is surrounded by a conductive panel of said housing and a conductive chassis of said video cassette deck and is thus shielded electromagnetically.
